(19) Europäisches Patentamt
European Patent Office
Office européen des brevets

(11) **EP 2 556 251 B1**

(12) **EUROPÄISCHE PATENTSCHRIFT**

(45) Veröffentlichungstag und Bekanntmachung des Hinweises auf die Patenterteilung:
**14.01.2015 Patentblatt 2015/03**

(51) Int Cl.:
*F03G 3/00* (2006.01) *F03B 17/00* (2006.01)
*H02J 15/00* (2006.01)

(21) Anmeldenummer: **11751813.4**

(22) Anmeldetag: **05.08.2011**

(86) Internationale Anmeldenummer:
**PCT/EP2011/003933**

(87) Internationale Veröffentlichungsnummer:
**WO 2012/022439 (23.02.2012 Gazette 2012/08)**

(54) **ANLAGE ZUR SPEICHERUNG VON LAGEENERGIE UND VERFAHREN ZUR HERSTELLUNG EINER SOLCHEN ANLAGE**

SYTEM FOR STORAGE OF POTENTIAL ENERGY AND METHOD FOR ITS CONSTRUCTION

SYSTÈME POUR LE STOCKAGE D'ÉNERGIE POTENTIELLE ET MÉTHODE POUR SA CONSTRUCTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.08.2010 DE 102010034757**

(43) Veröffentlichungstag der Anmeldung:
**13.02.2013 Patentblatt 2013/07**

(73) Patentinhaber: **Heindl Energy GmbH
70563 Stuttgart (DE)**

(72) Erfinder: **Heindl, Eduard
78120 Furtwangen (DE)**

(74) Vertreter: **Patentanwälte
Westphal, Mussgnug & Partner
Am Riettor 5
78048 Villingen-Schwenningen (DE)**

(56) Entgegenhaltungen:
**WO-A1-2004/002897 DE-A1-102008 006 897**

## Beschreibung

Es ist bekannt, dass Energie durch Anheben von Massen gespeichert werden kann. Das bekannteste Verfahren sind Pumpspeicherkraftwerke, bei denen aus einem Reservoir Wasser auf ein höheres Niveau gepumpt wird. Bei Bedarf kann die Energie durch Ablassen des Wassers mit einer zwischengeschalteten Turbine wieder in elektrische Energie umgewandelt werden. Dieses Verfahren hat den Nachteil, dass ein hochgelegenes Speicherbecken benötigt wird, was einen erheblichen Flächenbedarf hat, und dass nur in Gebirgen geeignete Standorte existieren. Einen guten Überblick zu dieser Technik liefert die Internetseite http://de.wikipedia.org/wiki/Pumpspeicherkraftwerk.

Eine Alternative ist das Anheben von Gebäuden mit einem hydraulischen System, wie es in der Patentschrift "Potential Energy Storage System", Patent No.: US 6.996.937 B2 beschrieben wird. Der Nachteil ist ein hoher technischer Aufwand im Gebäude und die verhältnismäßig geringe Energiemenge, die relativ zum Aufwand gespeichert werden kann. Vergleichbare Vorschläge, mit Kränen Massen anzuheben, wie in der Patentanmeldung DE 10 2007 057 323 A1 beschrieben, oder über Gleise auf höhere Orte zu verlagern, bringen hohe Kosten pro gespeicherter Energieeinheit und einen hohen Verschleiß der Systeme mit sich.

Dokument WO 2 004 002 897 offenbart ein anderes Beispiel des Stand der Technik.

Der Erfindung liegt das Problem zugrunde, eine Anlage zur Speicherung von Lageenergie und ein Verfahren zur Herstellung einer solchen Anlage bereitzustellen, die für eine Speicherung großer Energiemengen bis in die Größenordnung des Tagesbedarfs eines Landes wie Deutschland geeignet ist und geringe Kosten pro gespeicherter Energieeinheit und geringen Verschleiß des Systems mit sich bringt.

Dieses Problem wird durch eine Anlage zur Speicherung von Lageenergie gemäß Patentanspruch 1 und ein Verfahren zur Herstellung einer derartigen Anlage mit den Merkmalen des Patentanspruchs 6 gelöst. Vorteilhafte Ausgestaltungen der Erfindung sind Gegenstand der jeweils abhängigen Ansprüche.

Eine erfindungsgemäße Anlage zur Speicherung von Lageenergie weist einen Hydraulikzylinder, eine anzuhebenden Masse und eine Dichtungsring am Rand der anzuhebenden Masse auf, so dass sicher gestellt ist, dass an mindestens einer Stelle der Zwischenraum zwischen der anzuhebenden Masse und der dieser zugewandten Innenwand des Hydraulikzylinders gegen einen Durchtritt von Hydraulikflüssigkeit, hier insbesondere Wasser, abgedichtet ist. Die anzuhebende Masse bildet also einen Kolben, der im Hydraulikzylinder geführt wird. Es wird ergänzend darauf hingewiesen, dass der Hydraulikzylinder auch einen Querschnitt haben kann, der von der Kreisform abweicht. Zweckmäßig ist allerdings ein über die Länge des Hydraulikzylinders in Richtung zwischen Erdoberfläche und Erdmittelpunkt gesehen konstanter Querschnitt, um ein Verkeilen einer anzuhebenden Masse im Hydraulikzylinder möglichst zu vermeiden.

Erfindungswesentlich ist, dass die anzuhebende Masse eine Felsmasse ist, die durch einen ausgeschnittenen Fels dargestellt wird, dass der Hydraulikzylinder durch den Hohlraum zwischen umgebendem Gestein und dem ausgeschnittenen Fels gebildet wird und dass der Hohlraum durch den Dichtungsring zum umgebenden Gestein hin abgedichtet wird. Im Gegensatz zu bekannten Anlagen zur Speicherung von Lageenergie wird liegt also eine Situation vor, in der die anzuhebende Masse und der Hydraulikzylinder "aus dem Vollen gearbeitet" sind.

Wenn nachfolgend die Begrifft "oben" und "unten" im Zusammenhang mit dem Hydraulikzylinder und/oder der anzuhebenden Masse verwendet werden, ist mit "unten" die dem Erdmittelpunkt zugewandte Seite gemeint und mit "oben" die dieser Seite gegenüberliegende Seite.

In einer besonders vorteilhaften Ausführungsform der Erfindung werden etwaige Dichteschwankungen des Materials innerhalb des Volumens der anzuhebenden Masse, die bei natürlichen Felsen denkbar sind, durch Anordnen von Ballastmitteln kompensiert, die auf der Stirnseite der anzuhebenden Masse, die der Atmosphäre zugewandt ist, d.h. der oberen Seite, die ursprünglich einen Teil der Erdoberfläche gebildet hat, angeordnet sind. Insbesondere können als Ballastmittel Wassertanks verwendet werden. Auf diese Weise kann ein Verkippen der anzuhebenden Masse im Hydraulikzylinder, das die Bewegung des Zylinders behindern könnte, vermieden werden

Eine besonders gute Abdichtung wird bei einer Anlage zur Speicherung von Lageenergie erreicht, bei der der Dichtungsring durch einen den Umfang der anzuhebenden Masse umlaufenden Konus gebildet wird, in den ein zylinderförmiges Gelenk eingelegt ist, das eine mit einem Dichtungswulst versehene Lamelle trägt. Durch den Druck einer Hydraulikflüssigkeit wird somit der Dichtungswulst gegen die Oberfläche der Wand des Hydraulikzylinders gedrückt und so eine Abdichtung erzielt. Besonders bevorzugt ist dabei wegen einer besonders guten Abdichtung bei hohen Drücken eine Ausführungsform, bei der ein dichtes, flexibles Material an der Unterseite der Lamelle angebracht ist, das schlüssig mit dem Dichtungswulst und der anzuhebenden Masse schließt.

Besonders reibungsarm kann das Anheben und Absenken der anzuhebenden Masse erfolgen, wenn der Dichtungsring in halber Arbeitshöhe angeordnet ist, so dass ein abrollender Dichtungsring vorliegt.

Das erfindungsgemäße Verfahren zur Herstellung einer Anlage zur Speicherung von Lageenergie weist zumindest die folgenden Schritte auf:

a) Abteufen eines Schachts, der mindestens eine Tiefe H hat, unter die Erdoberfläche. Die Tiefe H entspricht dabei in etwa der Längenausdehnung der anzuhebenden Masse in Arbeitsrichtung, also in der Richtung zwischen Erdoberfläche und Erdmittelpunkt. Insbesondere wird dieser Schacht, der als Versorgungs- und Transportschacht für die späteren Arbeiten dienen soll, in der Regel zweckmäßigerweise außerhalb des Bereiches liegen, der später die anzuhebende Masse bildet. Die Tiefe H muss nicht zwingend in einem einzigen Abteufschritt erreicht werden, sondern es ist auch denkbar, dass nach Abteufen eines Teilstücks vor dem oder gleichzeitig mit dem Abteufen eines weiteren Teilstücks weitere Verfahrensschritte ausgeführt werden. Natürlich können auch mehrere solche Schächte abgeteuft werden, beispielsweise um Transportwege zu reduzieren.

b) Vortreiben mindestens eines ersten horizontalen Stollens in der Tiefe H bis zu der Stelle, an der die Wand eines Hydraulikzylinders liegen soll.

c) Treiben eines ersten Tunnels, der in sich geschlossen ist, dessen Anfang und Ende also ineinander übergehen, in den Berg ausgehend von der Stelle des ersten horizontalen Stollens, an der die Wand des Hydraulikzylinders liegen soll. Dieser erste Tunnel gibt zweckmäßigerweise die spätere Umfangslinie des Hydraulikzylinders vor.

d) Abteufen mindestens einer Bohrung von der Erdoberfläche bis in die Tiefe H, wobei die Bohrungen so positioniert sind, dass sie jeweils senkrecht zum ersten Tunnel von der Erdoberfläche bis zum ersten Tunnel verlaufen. Diese Bohrungen können in den nachfolgenden Schritten als Startpunkte für das Heraussägen der anzuhebenden Masse und die damit gleichzeitig einhergehende Schaffung des Hydraulikzylinders und von dessen Wandfläche verwendet werden.

e) Einführen mindestens einer Gesteinssäge in die Bohrungen.

f) Aussägen mindestens eines Abschnitt der Wand des Hydraulikzylinders zwischen Erdoberfläche und Tunnel mit der Gesteinssäge.
Die Schritte d) bis f) dienen somit der Schaffung der Seitenflächen von Hydraulikzylinder und anzuhebender Masse.

g) Führen horizontaler Bohrlöcher ausgehend vom Tunnel in die Mitte des Hydraulikzylinders.

h) Zertrümmern des Gesteins am Boden des Hydraulikzylinders, so dass keine feste mechanische Verbindung zwischen dem Zylinderboden und dem Hubkolben mehr vorliegt.
Mit den Schritten g) und h) wird die Bodenfläche (also die Unterseite) von Hydraulikzylinder und anzuhebender Masse geschaffen.

i) Vorantreiben eines Tunnelstücks zwischen einem Flüssigkeitsreservoir und dem Boden des Hydraulikzylinders, so dass Flüssigkeit in den Hydraulikzylinder zugeführt werden kann.

j) Befestigen eines Dichtungsrings an der anzuhebenden Masse.

k) Wasserdichtes Abschließen des ersten horizontalen Stollens.

Die Schritte des Verfahrens können in der angegebenen Reihenfolge abgearbeitet werden, es ist aber auch möglich, Verfahrensschritte parallel zueinander abzuarbeiten. In der Regel ist eine Parallelisierung wegen des resultierenden Zeitgewinns wünschenswert, sie erfordert aber einen stärkeren Einsatz von Ressourcen.

In einer vorteilhaften Ausgestaltung des Verfahrens wird mindestens ein weiterer horizontaler Stollen in einer Tiefe vorangetrieben, die kleiner als H ist, und bis zu der Stelle führt, an der die Wand des Hydraulikzylinders liegen soll. Daraufhin wird ein weiterer Tunnel, der in sich geschlossen ist, ausgehend von der Stelle des ersten horizontalen Stollens, an der die Wand des Hydraulikzylinders liegen soll, in den Berg getrieben und der weitere horizontalen Stollen wasserdicht abgeschlossen. Dadurch kann die maximal erreichbare Tiefe des Hydraulikzylinders, die durch die Leistungsfähigkeit der Gesteinssägen begrenzt ist, erhöht werden.

Eine Parallelisierung der Arbeitsschritte kann insbesondere dadurch erreicht werden, dass bei der Durchführung der Schritte e) und f) gleichzeitig mehrere Gesteinssägen in unterschiedlichen Löchern verwendet werden.

Als besonders einfache Methode für die Ausführung des Schritts h) bietet sich eine Sprengung an.

Besonders wünschenswert ist es, eine möglichst homogene Gewichtsverteilung der anzuhebenden Masse zu erzielen. Daher ist es zweckmäßig, eine Vermessung der Oberfläche der durch das Verfahren geschaffenen anzuhebenden Masse mit einem Gravimeter durchzuführen.

Der Erfindung liegt der Grundgedanke zu Grunde, dass eine große Felsmasse durch ein hydraulisches System angehoben wird, wobei die anzuhebende Masse durch einen vorzugsweise zylindrisch ausgeschnittenen Fels dargestellt wird. Der Hydraulikzylinder ist der entstandene Hohlraum zwischen dem umgebenden Gestein und dem ausgeschnittenen Fels. Dieser Hohlraum ist durch einen Dichtungsring am Rand der zu hebenden Masse gegen das umgebende Gestein abgedichtet. Der Hohlraum wird über eine Hochdruckpumpe und einen Verbindungsstollen zwischen Pumpe und Hohlraum mit Wasser aus einem Reservoir gefüllt. Dabei hebt sich die Felsmasse aufgrund des Wasserdrucks an und speichert damit potentielle Energie (Lageenergie). Diese Lageenergie kann bei Bedarf dadurch entnommen werden, dass das unter Druck stehende Wasser über den Verbindungsstollen und über eine Turbine, wie in Pumpspeicherkraftwerken üblich, geleitet wird. Aus der Rotationsenergie der Turbine wird konventionell, über einen Generator, Strom gewonnen und weitergeleitet.

Der Vorteil der Erfindung liegt insbesondere darin, dass die ausgeschnittene Felsmasse in der dritten Potenz des Systemradius wächst, die Schnittfläche, die die hauptsächlichen Herstellungskosten verursacht, aber nur in der zweiten Potenz mit dem Systemradius wächst.

Dies folgt aus der Gleichung für die Mantelfläche M eines Zylinders, dessen Höhe h dem Zylinderdurchmesser entspricht:

$$M = 2 * \pi * r * h = 4 * \pi * r^2 \quad (1)$$

Die gespeicherte Energiemenge wächst hingegen mit der vierten Potenz des Systemradius. Dies liegt daran, dass die mögliche Hubhöhe ebenfalls proportional zum Systemradius wächst.

Die maximal gespeicherte Energie berechnet sich aus der Dichte des Gesteins $\rho_1$ und der effektiven Dichte $\rho_2$, die aufgrund der hydrostatischen Situation zu berücksichtigen ist, da Wasser mit der Dichte $\rho_3$ die Gesteinsmasse ersetzt. Somit ist die effektive Dichte:

$$\rho_2 = \rho_1 - \rho_3 \quad (2)$$

Es gilt die Gleichung für die Potentielle Energie E bei einer Hubhöhe D im Schwerefeld der Erde mit der Fallkonstanten g für eine Masse m

$$E = g * m * D \quad (3)$$

Die effektive Masse eines Zylinders errechnet sich nach

$$m = \pi * r^2 * h * \rho_2 \quad (4)$$

Gleichung (4) in Gleichung (3) eingesetzt, unter Berücksichtigung, dass D = r sein soll:

$$E = g * \pi * r^2 * 2 * r * \rho_2 * r \quad (5)$$

Gleichung (5) zusammengefasst:

$$E = g * \rho_2 * 2 * \pi * r^4 \quad (6)$$

Womit gezeigt ist, dass in diesem System die gespeicherte Energie proportional zur vierten Potenz des Systemradius wächst.

Der Systemradius ist im einfachen Fall einer zylinderförmigen anzuhebenden Masse der Radius r des Zylinders, die Höhe h des Zylinders soll dem Zylinderdurchmesser d entsprechen (d = 2 * r)). Die Abdichtung hat eine Länge L, die proportional zum Systemradius ist (L= 2 * π * r), und fällt daher bei großen Anlagen im Verhältnis zu den anderen Elementen nicht besonders groß aus.

Nachfolgend wird die Erfindung an Hand von Figuren, die Ausführungsbeispiele darstellen, näher erläutert. Es zeigen:

Fig.1:     Ein Ausführungsbeispiel einer Anlage zur Speicherung von Lageenergie,

Fig.2:     Ein erstes Zwischenstadium bei der Durchführung eines Verfahrens zum Aufbau einer solchen Anlage,

Fig.3:     Ein zweites Zwischenstadium bei der Durchführung eines Verfahrens zum Aufbau einer solchen Anlage,

Fig.4:     Eine Detaildarstellung der Vorgehensweise beim Aussägen der anzuhebenden Masse aus dem Fels, und

Fig.5:     Eine Detaildarstellung des Aufbaus eines Dichtrings für eine solche Anlage,

Gleiche Bauteile identischer Ausführungsformen werden in allen Figuren mit denselben Bezugszeichen versehen, sofern nichts anderes erwähnt ist.

Ein Ausführungsbeispiel der Erfindung ist in der Zeichnung 1 dargestellt und wird im Folgenden näher beschrieben. Bei der dargestellten Anlage zur Speicherung von Lageenergie 10 wird ein aus dem Fels herausgeschnittener Hubkolben 1 mit dem Durchmesser d in einem Zylinder 2 geführt, der durch das Herausschneiden des Hubkolbens 1 aus dem Fels gebildet wurde. Zwischen dem durch die aus dem Fels geschnittene anzuhebende Masse gebildeten Hubkolben 1 und dem als Hydraulikzylinder dienenden Zylinder 2 wird eine Dichtung 1b, auf der halben Strecke h, also in der Höhe h/2, angebracht. Von unten wird an der Stelle 4 über ein Leitungssystem 5 und 6 Wasser in den Zylinder 2 mit einer Pumpe 8 aus dem Reservoir 9 zugeführt. Die Fläche 3 soll die Erdoberfläche darstellen. Befindet sich der Hubkolben in angehobener Lage (Hubhöhe) D, so kann jederzeit durch den hydrostatischen Druck Wasser über eine Turbine 7 in das Reservoir 9 zurückfließen und dabei Strom in einem Generator 7b produzieren.

Die speicherbare Energiemenge E hängt von der Hubhöhe D und der effektiven Masse m des Zylinders 2 über die einfache Gleichung: E=g*D*m ab, wobei g die Erdbeschleunigung mit 9,81N/kg ist.

Um große Energiemengen zu speichern, muss die Masse m möglichst groß gewählt werden. Die Hubhöhe D kann nicht beliebig frei gewählt werden, da sie kleiner als die halbe Zylinderlänge h sein muss, da es sonst zum Verkippen des Hubkolbens kommen kann.

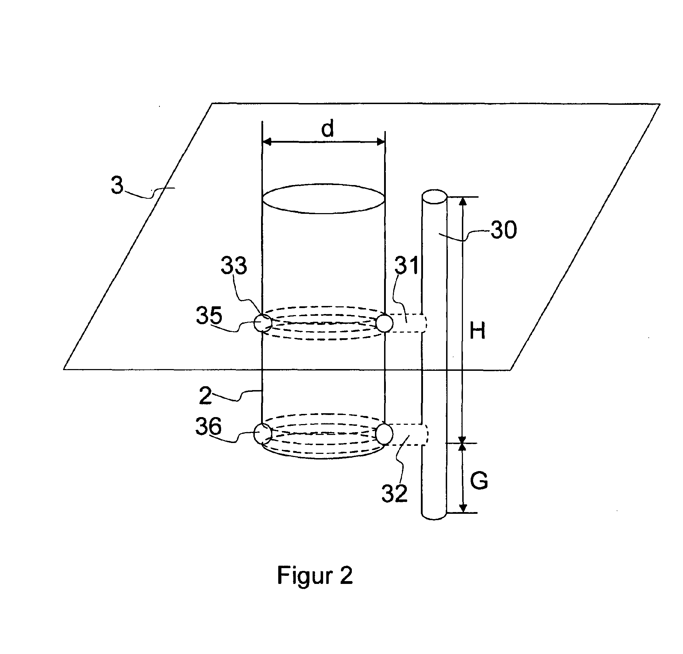

Der Aufbau des Ausführungsbeispiels erfolgt durch bergmännische Arbeiten, die im folgenden kurz anhand der Figuren 2 bis 4 geschildert werden. Zuerst wird, wie in Figur 2 dargestellt, ein Schacht 30 mit einer Tiefe H unter der Erdoberfläche abgeteuft. Von diesem Schacht werden zwei Stollen, nämlich ein Stollen 32 in der Tiefe H und ein Stollen 31 in der Tiefe H/2 horizontal bis nahe zur geplanten Zylinderwand 2 vorgetrieben. Von dort aus werden kreisförmige Tunnel 35 und 36 mit einem dem Durchmesser d des späteren Hubkolbens 2 entsprechenden Torus-Durchmesser in den Berg getrieben.

Wird der Schacht 30, wie in Figur 2 dargestellt, noch um eine Tiefe G weiter abgeteuft, kann er später als Leitungsabschnitt 6 dienen oder diesen aufnehmen.

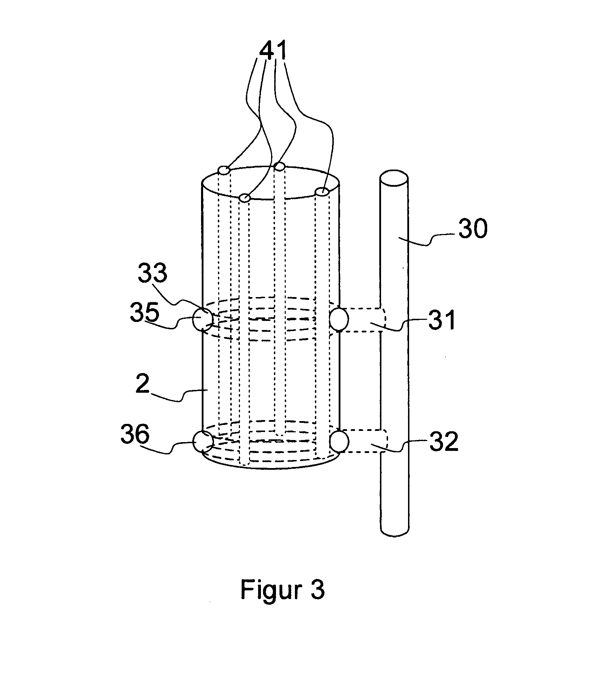

Von der Erdoberfläche 3 aus werden mehrere Bohrungen 41, wie in Figur 3 dargestellt, bis in die Tiefe H mit relativ kleinem Radius abgeteuft. Diese Bohrlöcher 41 dienen zum Einführen von Gesteinssägen, mit denen die Zylinderwand ausgesägt wird.

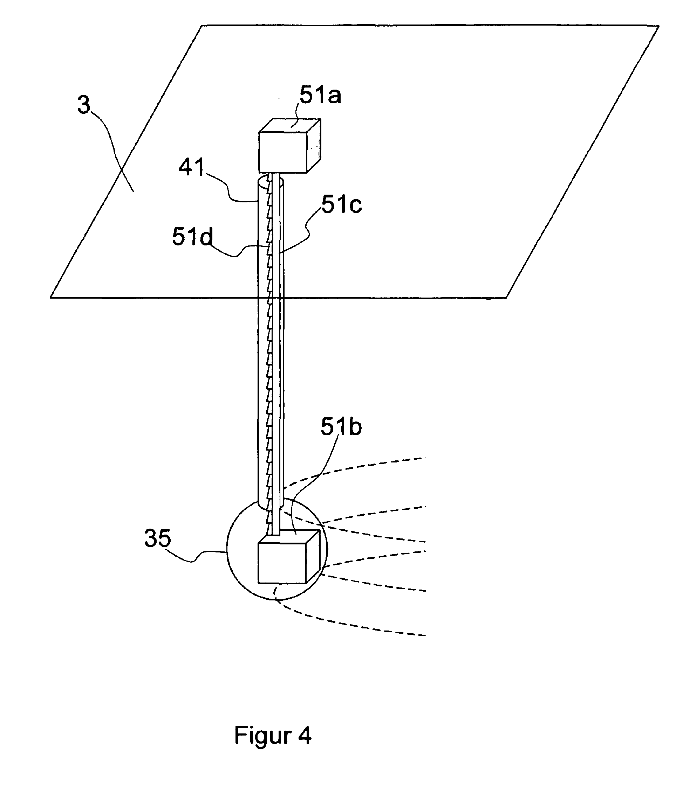

In Figur 4 ist dargestellt, wie zwischen einem oberen Sägeantrieb 51a, der auf der Erdoberfläche steht, und einem unteren Sägeantrieb 51b, der im Tunnel 35 steht, ein Sägeband 51c mit Sägezähnen 51d eingespannt ist. Angetrieben durch den oberen und/oder unteren Sägeantrieb 51a, 51b bewegt sich das Sägeband 51c und wird gegen die Felswand geführt. Dabei wird das Gestein abgetragen und im Tunnel 35 entsorgt. Das Sägeband 51c kann zusätzlich mit Wasser, das oben mit dem Sägeantrieb 51a eingeführt wird, gekühlt werden. Die beiden Sägebandantriebe 51a, 51b werden auf einem Kreisbogen geführt, der dem Hubkolben 2 entspricht. Damit entsteht die kreisförmig ausgeschnittene obere Hubkolben 2. Diese Arbeiten können parallel an allen Bohrlöchern 41 ausgeführt werden.

Parallel dazu werden vom Tunnel 35 zum Tunnel 36 ebenfalls durch die Bohrlöcher 41 weitere Sägebänder geführt und mit Sägebandantrieben, die in den Tunnel 35 und 36 stehen, angetrieben. Damit wird der untere Teil des Hubzylinders freigelegt. Bei sehr hohen Zylindern können weitere torusförmige Tunnel angelegt werden, damit die Länge der Sägebänder nicht die technischen Möglichkeiten überschreitet.

Parallel zu diesen Arbeiten werden vom Tunnel 36 aus, dem Basistunnel, horizontale Bohrlöcher in die Mitte des Zylinders 2 geführt. Diese Löcher werden mit Sprengmittel gefüllt und das Sprengmittel wird gezündet. Damit wird das Gestein im Bereich des hierdurch entstehenden Zylinderbodens zertrümmert und es liegt keine feste mechanische Verbindung zwischen dem Zylinderboden und dem Hubkolben mehr vor.

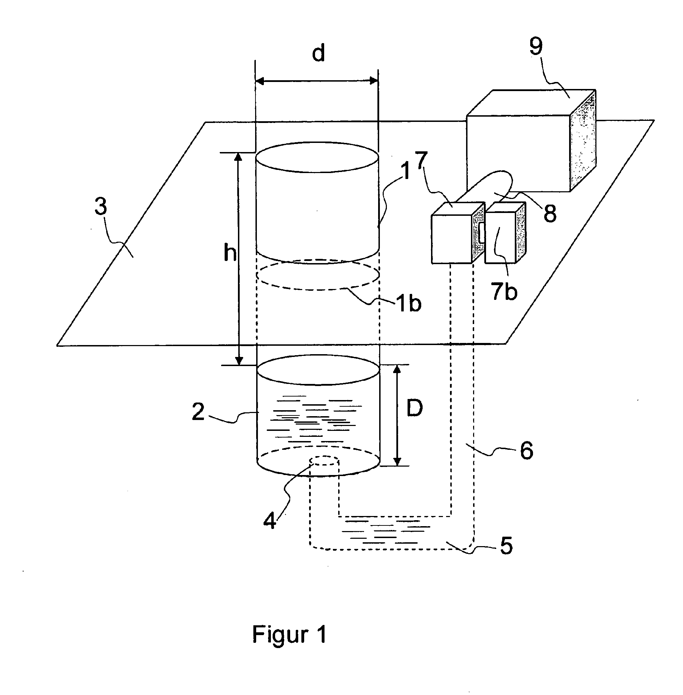

Parallel dazu werden die Tunnelstücke 5 und 4 aus Figur 1 vorangetrieben, um den Boden des Zylinders 2 zu erreichen, über den das Wasser in den Zylinder zugeführt werden kann.

Wenn die Sägearbeiten beendet sind, wird vom Tunnel 35 in Figur 2 aus der Dichtungsring 33 am Hubkolben befestigt. Danach werden die Verbindungsstollen 31 und 32 wasserdicht abgeschlossen. Jetzt kann über die Pumpe 8 Wasser eingespeist und damit Energie gespeichert werden.

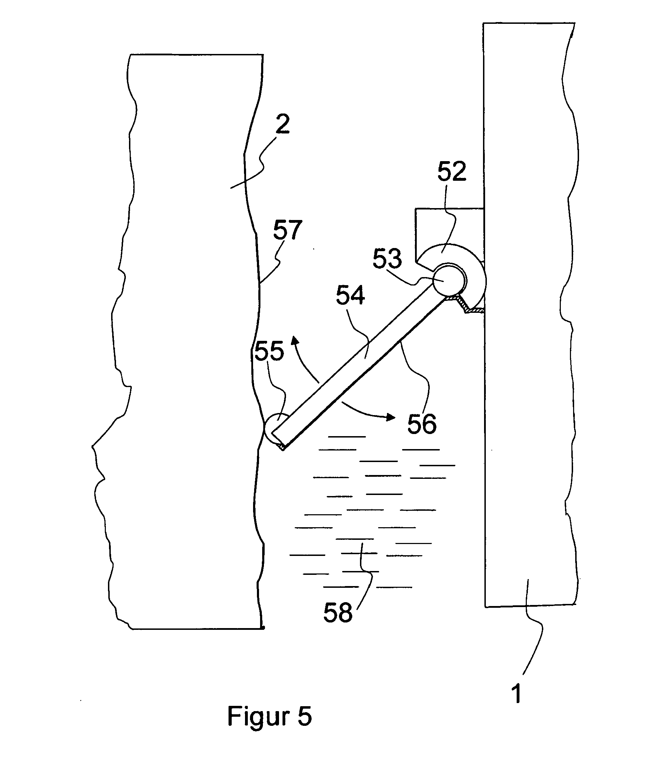

In Figur 5 ist ein Dichtungsring 33 mit einer bevorzugten Konstruktion abgebildet, die ausgleichend auf Unebenheiten der Wand des Zylinders 2 reagieren kann. Dazu ist in einem um den gesamten Hubkolben 1 umlaufenden Konus 52 ein zylinderförmiges Gelenk 53 eingelegt, das eine Lamelle 54 trägt, die mit einer Dichtungswulst 55 gegen die Oberfläche 57 der Zylinderwand 2 aufgrund des Wasserdrucks 58 drückt und damit den Kolben 1 gegen seine Umgebung abdichtet. Zur Verbesserung der Abdichtwirkung kann ein dichtes flexibles Material 56 an der Unterseite der Dichtungslamelle angebracht werden, das schlüssig mit der Wulst 55 und dem Kolben 51 schließt. Es ist zu beachten, dass die Lamelle 54, aufgrund der großen Länge, die mehrere Kilometer betragen kann, ein eindimensionales mechanisches Verhalten zeigt.

Es folgt ein Rechenbeispiel für die Energiemenge die durch eine Anlage mit 500m Radius gespeichert werden kann. Bei einer Angenommenen mittleren Dichte des Gesteins von $\rho_1 = 2500$ kg/m$^3$ und nach Gleichung (2) einer effektiven Dichte von $\rho_2 = 1500$kg/m$^3$ erhält man aus Gleichung (6)

$$E = 9{,}81 \text{ N/kg} * 1500\text{kg/m}^3 * 2 * 3{,}14 * (500\text{m})^4$$

oder ausgerechnet

$$E = 5.775.637.500.000.000 \text{ Joule.}$$

Umgerechnet in die üblichere Einheit Kilowattstunde können somit 1.604.343.750 kWh in der Anlage gespeichert werden. Zum Vergleich, die Bruttostromerzeugung eines durchschnittlichen Tages in Deutschland betrug 1.635.000.000 kWh im Jahr 2009, Quelle BMWI (http://bmwi.de/BMWi/Navigation/Energie/Statistik-und-Prognosen/energiedaten.html)

Aus der Rechnung geht hervor, dass die gespeicherte Energiemenge gegenüber allen vergleichbaren Speicherkraftwerken mit Wasserkraft sehr groß ist. Dabei ist der Eingriff in die Umwelt relativ gering. Es wird nur Wasser in den Boden gepumpt, der notwendige Eingriff in die Landoberfläche ist gering und beschränkt sich im Wesentlichen auf die Fläche des Hubkolbens. Dieser wird allerdings durch das Anheben gut sichtbar. Ein katastrophales Versagen des Systems ist schwer denkbar, da dazu das Wasser aus dem System schlagartig entweichen müsste, was aufgrund der Bauweise, etwa im Vergleich zu einem Staudamm, nicht möglich ist.

**Patentansprüche**

1. Anlage zur Speicherung von Lageenergie (10) mit einem Hydraulikzylinder (2), einer anzuhebenden Masse (1) und mit einem Dichtungsring (33) am Rand der anzuhebenden Masse (1),
**dadurch gekennzeichnet, dass** die anzuhebende Masse (1) eine Felsmasse ist, die durch einen ausgeschnittenen Fels dargestellt wird, dass der Hydraulikzylinder (2) durch den Hohlraum zwischen umgebendem Gestein und dem ausgeschnittenen Fels gebildet wird und dass der Hohlraum durch den Dichtungsring (33) zum umgebenden Gestein hin abgedichtet wird.

2. Anlage zur Speicherung von Lageenergie (10)nach Anspruch 1,
**dadurch gekennzeichnet, dass** auf der Oberseite der anzuhebenden Masse (1) ein oder mehrere Ballastmittel angeordnet sind.

3. Anlage zur Speicherung von Lageenergie (10) nach einem der Ansprüche 1 oder 2,
**dadurch gekennzeichnet, dass** der Dichtungsring (33) einen den Umfang der anzuhebenden Masse umlaufenden Konus (52) aufweist, in den ein zylinderförmiges Gelenk (53) eingelegt ist, das eine mit einem Dichtungswulst (55) versehene Lamelle (54) trägt, so dass durch den Druck einer Hydraulikflüssigkeit der Dichtungswulst (55) gegen die Oberfläche (57) der Wand des Hydraulikzylinders (2) gedrückt und so eine Abdichtung erzielt wird.

4. Anlage zur Speicherung von Lageenergie (10) nach Anspruch 3,

**dadurch gekennzeichnet, dass** ein dichtes, flexibles Material (56) an der Unterseite der Lamelle (54) angebracht ist, das schlüssig mit dem Dichtungswulst (55) und der anzuhebenden Masse (51) schließt.

5. Anlage zur Speicherung von Lageenergie (10) nach einem der vorstehenden Ansprüche,
**dadurch gekennzeichnet, dass** der Dichtungsring (33) in halber Arbeitshöhe (H/2) angeordnet ist, so dass ein abrollender Dichtungsring vorliegt.

6. Verfahren zur Herstellung einer Anlage zur Speicherung von Lageenergie mit einer anzuhebenden Masse mit den Schritten:

   a) Abteufen eines Schachts (30) unter der Erdoberfläche, der mindestens eine Tiefe H hat;
   b) Vortreiben mindestens eines ersten horizontalen Stollens (32) in der Tiefe H bis zu der Stelle, an der die Wand eines Hydraulikzylinders (2) liegen soll;
   c) Treiben eines ersten Tunnels (36), der in sich geschlossen ist, in den Berg, ausgehend von der Stelle des ersten horizontalen Stollens (32), an der die Wand des Hydraulikzylinders (2) liegen soll;
   d) Abteufen mindestens einer Bohrung (41) von der Erdoberfläche (3) bis in die Tiefe H, wobei die Bohrungen (41) so positioniert sind, dass sie jeweils senkrecht zum ersten Tunnel (36) von der Erdoberfläche (3) bis zum ersten Tunnel (36) verlaufen;
   e) Einführen mindestens einer Gesteinssäge in die Bohrungen (41) ;
   f) Aussägen mindestens eines Abschnitts zum Ausbilden der Wand des Hydraulikzylinders (2) zwischen Erdoberfläche (3) und Tunnel (36) mit der Gesteinssäge;
   g) Führen horizontaler Bohrlöcher ausgehend vom Tunnel (36) in die Mitte des auszubildenden Hydraulikzylinders(2);
   h) Zertrümmern des Gesteins am Boden des Hydraulikzylinders (2), so dass keine feste mechanische Verbindung zwischen dem Boden des Hydraulikzylinders (2) und der anzuhebenden Masse (1) mehr vorliegt,
   i) Vorantreiben eines Tunnelstücks (4,5) zwischen einem Flüssigkeitsreservoir und dem Boden des Hydraulikzylinders (2), so dass Flüssigkeit in den Hydraulikzylinder (2) zugeführt werden kann;
   j) Befestigen eines Dichtungsrings (33) an der anzuhebenden Masse(1); und
   k) Wasserdichtes Abschließen des ersten horizontalen Stollens (32).

7. Verfahren nach Anspruch 6,
**dadurch gekennzeichnet, dass** mindestens ein weiterer horizontaler Stollen (31) in einer Tiefe, die kleiner als H ist, bis zu der Stelle, an der die Wand des Hydraulikzylinders (2) liegen soll vorgetrieben wird, dass mindestens ein weiterer Tunnel (35), der in sich geschlossen ist, ausgehend von der Stelle des weiteren horizontalen Stollens (31), an der die Wand des Hydraulikzylinders (2) liegen soll, in den Berg getrieben wird, und dass die weiteren horizontalen Stollen (31) wasserdicht abgeschlossen werden.

8. Verfahren nach Anspruch 6 oder 7,
**dadurch gekennzeichnet, dass** bei der Durchführung der Schritte e) und f) gleichzeitig mehrere Gesteinssägen in unterschiedlichen Bohrlöchern (41) verwendet werden.

9. Verfahren nach einem der Ansprüche 6 bis 8,
**dadurch gekennzeichnet, dass** das Ausführen des Schritts h) durch eine Sprengung erfolgt.

10. Verfahren nach einem der Ansprüche 6 bis 9,
**dadurch gekennzeichnet, dass** eine Vermessung der Oberfläche der anzuhebenden Masse (1) mit einem Gravimeter erfolgt.

**Claims**

1. Installation for the storage of potential energy (10) with an hydraulic cylinder (2), a body to be raised (1), and with a gasket (33) on the periphery of the body to be raised (1), **characterised by** the fact that the body to be raised (1) is a mass of stone, shown as a piece of cut rock, that the hydraulic cylinder (2) is shaped by the hollow space between the surrounding stone and the cut rock, and that the hollow space is sealed off from the surrounding rocks by the gasket (33).

2. Installation for the storage of potential energy (10) in accordance with Claim 1, **characterised by** the fact that one or more means of ballast are positioned on the upper surface of the body (1) to be raised.

3. Installation for the storage of potential energy (10) in accordance with Claims 1 or 2, **characterised by** the fact that the gasket (33) has a cone (52) revolving around the perimeter of the body to be raised, in which a cylinder shaped joint (53) is inserted, which carries a blade (54) provided with a sealing bead (55), so that this bead (55) is pressed against the upper surface (57) of the wall of the hydraulic cylinder (2) by the pressure of an hydraulic fluid, a seal thus being achieved.

4. Installation for the storage of potential energy (10) in accordance with Claim 3, **characterised by** the fact that a thick, flexible material (56) is fitted to the underside of the blade (54), which locks smoothly with the sealing bead (55) and the body (51) to be raised.

5. Installation for the storage of potential energy (10) in accordance with one of the foregoing Claims, **characterised by** the fact that the gasket (33) is positioned at half working height (H/2), so that there is an unrolling gasket.

6. Procedure for the manufacture of an installation for the storage of potential energy by a body to be raised, with the following stages:

   a) The sinking below the ground of a shaft (30) of at least depth H;
   b) The boring of at least one first horizontal gallery (32) at a depth H, up to the position at which the wall of a hydraulic cylinder (2) should be located;
   c) The boring into the mountain of a first self-contained tunnel (36), starting from the position of the first horizontal gallery (32) at which the wall of the hydraulic cylinder (2) should be located;
   d) The sinking of at least one bore from the ground (3) to a depth H, such that the bores (41) are positioned so that, in each case, they run vertically to the first tunnel (36) from the ground (3) to that tunnel (36);
   e) Insertion into the bores of at least one rock cutter (41) ;
   f) The cutting out by means of the rock cutter of at least one section to form the wall of the hydraulic cylinder (2) between the ground (3) and the tunnel (36);
   g) The driving of horizontal boreholes into the centre of the hydraulic cylinder (2) to be formed, starting from the tunnel (36);
   h) Breaking up the stone on the floor of the hydraulic cylinder (2) so that there is no further fixed mechanical connection between the floor of the hydraulic cylinder (2) and the body (1) to be raised;
   i) The driving in of a tunnel section (4, 5) between a fluid reservoir and the floor of the hydraulic cylinder (2) so that fluid can be fed into the hydraulic cylinder (2) ;
   j) Attachment of a gasket (33) to the body (1) to be raised;
   and
   k) Watertight sealing of the first horizontal gallery (32).

7. Procedure in accordance with Claim 6, **characterised by** the fact that at least one further horizontal gallery (31)is driven in to a depth which is smaller than H, up to the position at which the wall of the hydraulic cylinder(2) should be located, that at least one further self-contained tunnel (35) is driven into the mountain starting from the position of the further horizontal gallery (31) at which the wall of the hydraulic cylinder (2) should be located, and that the further horizontal galleries (31) are made watertight.

8. Procedure in accordance with Claims 6 or 7, **characterised by** the fact that in the carrying out of stages e) and f) several rock cutters are used simultaneously in various boreholes (41).

9. Procedure in accordance with one of Claims 6 to 8, **characterised by** the fact that stage h) is carried out by means of an explosion.

10. Procedure in accordance with one of Claims 6 to 9, **characterised by** the fact that measurement of the upper surface of the body (1) to be raised is carried out using a gravimeter.

**Revendications**

1. Installation de stockage d'énergie potentielle (10) comprenant un cylindre hydraulique (2), une masse (1) devant être levée, et une bague d'étanchéité (33) située au bord de la masse (1) devant être levée,

EP 2 556 251 B1

**caractérisée en ce que**
la masse (1) devant être levée est une masse de roche constituée par une roche découpée, le cylindre hydraulique (2) est formé par le volume creux formé entre le rocher environnant et la roche découpée, et le volume creux est rendu étanche par la bague d'étanchéité (33) par rapport au rocher environnant.

2. Installation de stockage d'énergie potentielle (10) conforme à la revendication 1,
**caractérisée en ce que**
sur la face supérieure de la masse (1) devant être levée sont positionnés un ou plusieurs moyen(s) de ballastage.

3. Installation de stockage d'énergie potentielle (10) conforme à l'une des revendications 1 et 2,
**caractérisée en ce que**
la bague d'étanchéité (33) comporte un cône (52) entourant la périphérie de la masse devant être levée dans lequel est montée une articulation cylindrique (53) qui porte une lamelle (54) équipée d'un bourrelet d'étanchéité (55) de sorte que le bourrelet d'étanchéité (55) soit comprimé contre la surface (57) de la paroi du cylindre hydraulique (2) par la pression d'un fluide hydraulique et que l'on obtienne ainsi une étanchéité.

4. Installation de stockage d'énergie potentielle (10) conforme à la revendication 3,
**caractérisée en ce qu'**
un matériau étanche flexible (56) est appliqué sur la face inférieure de la lamelle (54) et s'assemble au bourrelet d'étanchéité (55) et à la masse (1) devant être levée.

5. Installation de stockage d'énergie potentielle (10) conforme à l'une des revendications précédentes,
**caractérisée en ce que**
la bague d'étanchéité (33) est située à la moitié de la hauteur de travail (H/2), de façon à obtenir une bague d'étanchéité se déroulant.

6. Procédé d'obtention d'une installation de stockage d'énergie potentielle comportant une masse devant être levée comportant les étapes consistant à :

    a) creuser sous la surface du sol un puits (30) ayant au moins une profondeur H,
    b) percer vers l'avant au moins une première galerie horizontale (32) dans la profondeur H jusqu'à l'endroit où doit être située la paroi d'un cylindre hydraulique (2),
    c) percer un premier tunnel (36) refermé sur lui-même dans la montagne à partir de l'endroit de la première galerie horizontale (32) où doit être située la paroi du cylindre hydraulique (2),
    d) creuser au moins un perçage (41) de la surface du sol (3) jusque dans la profondeur H, les perçages (41) étant positionnés de sorte qu'ils s'étendent respectivement perpendiculairement au premier tunnel (36) de la surface du sol (3) jusqu'au premier tunnel (36),
    e) introduire au moins une scie à pierre dans les perçages (41),
    f) scier au moins un tronçon pour former la paroi du cylindre hydraulique (2) entre la surface du sol (3) et le tunnel (36) avec la scie à pierre,
    g) faire passer des forages horizontaux à partir du tunnel (36) à la partie centrale du cylindre hydraulique (2) à former,
    h) fragmenter la pierre au fond du cylindre hydraulique (2) de sorte qu'il n'y ait plus de liaison mécanique solide entre le fond du cylindre hydraulique (2) et la masse (1) devant être levée,
    i) faire avancer en perçant un élément de tunnel (4, 5) entre un réservoir de liquide et le fond du cylindre hydraulique (2), de sorte que le liquide puisse être transféré dans le cylindre hydraulique (2),
    j) fixer une bague d'étanchéité (33) sur la masse (1) devant être levée, et
    k) obturer de façon étanche à l'eau la première galerie horizontale (32).

7. Procédé conforme à la revendication 6,
**caractérisé en ce qu'**
on perce au moins une autre galerie horizontale (31) à une profondeur qui est inférieure à la profondeur H jusqu'à l'endroit où la paroi du cylindre hydraulique (2) doit être appliquée, on perce dans la montagne au moins un autre tunnel (35) refermé sur lui-même à partir de l'endroit de l'autre galerie horizontale (31) sur laquelle doit être située la paroi du cylindre hydraulique (2) et obturer les autres galeries horizontales (31) de façon étanches au gaz.

8. Procédé conforme à la revendication 6 ou 7,
**caractérisé en ce que**

lors de la mise en oeuvre des étapes e) et f) on utilise simultanément plusieurs scies à pierre dans des forages (41) différents.

9. Procédé conforme à l'une des revendications 6 à 8,
**caractérisé en ce que**
la mise en oeuvre de l'étape h) est effectuée par explosions.

10. Procédé conforme à l'une des revendications 6 à 9,
**caractérisé en ce que**
l'on effectue une mesure de la surface de la masse (1) a lever avec un gravimètre.

Figur 1

Figur 2

Figur 3

Figur 4

2

57

52

53

54

55

56

58

1

Figur 5

**IN DER BESCHREIBUNG AUFGEFÜHRTE DOKUMENTE**

**In der Beschreibung aufgeführte Patentdokumente**

- US 6996937 B2
- DE 102007057323 A1
- WO 2004002897 A

**In der Beschreibung aufgeführte Nicht-Patentliteratur**

- Tages in Deutschland betrug. *Quelle BMWI,* 2009, http://bmwi.de/BMWi/Navigation/Energie/Statistik-und-Prognosen/energiedaten.html